# EUROPEAN PATENT APPLICATION

(11) **EP 3 660 063 A1**
(43) Date of publication of application: **03.06.2020**
(21) Application number: 19206760.1
(22) Date of filing: 01.11.2019
(51) Int. Cl.: C08G 18/24, C08G 18/42, C08G 18/73, C08G 18/80, C09D 175/06

(54) **CURABLE COATING COMPOSITION**

(30) Priority: 28.11.2018 KR 20180150211
(71) Applicant: KCC Corporation, Seoul 06608 (KR)
(72) Inventor: SON, In Seok, 50606 Yangsan-si, Gyeongsangnam-do (KR); KIM, Eui Hun, 44259 Ulsan (KR); KIM, Dong Geon, 44262 Ulsan (KR); CHO, Ick Jae, 44717 Ulsan (KR)
(74) Representative: Patentwerk B.V.

(57) **Abstract**

The present invention relates to a curable coating composition for a laminate steel panel having high DOI in appearance and various excellent properties required for a coating.

## Description

### [Technical Field]

The present invention relates to a curable coating composition for a laminate steel panel having high distinctness of image (DOI) in appearance and various excellent properties required for a coating.

### [Background]

A laminate steel panel including a synthetic resin film coated on a steel panel is widely used for various interior and exterior materials owing to its various advantages, including high durability, corrosion resistance to be less susceptible to rusting, low discoloration, good appearance, and so on.

The laminate steel panel is generally manufactured by coating an adhesive composition on a steel panel plated with zinc or chrome and attaching a polyvinyl chloride (PVC) film thereto. If the PVC film is used, a laminate steel panel having high DOI can be advantageously obtained. In this case, however, additives used in fabricating the PVC film, such as lead, organic tin, or zinc, may produce dioxin or other toxic substances. In this regard, many countries are moving to tighten environmental standards on PVC containing products.

Korean Patent Publication No. 10-2018-0104883 relating to a chlorine-free composition for forming an environment-friendly hot-melt film, discloses an adhesive composition comprising a thermoplastic elastomer composition. However, a laminate steel panel employing the disclosed composition cannot obtain sufficiently high DOI. Accordingly, there is still demand for development of an adhesive composition having excellent adhesiveness and sufficiently high DOI.

### [Disclosure of the Invention]

### [Problems to be Solved]

The present invention provides a curable coating composition having high DOI in appearance and various excellent properties (adhesiveness, etc.) required for a coating.

### [Means to Solve the Problems]

The present invention provides a curable coating composition comprising a polyester resin and a block isocyanate.

### [Effects of the Invention]

The present invention provides a curable coating composition having high DOI in appearance and various excellent properties, including adhesiveness, etc., required for a coating.

The curable coating composition according to the present invention can be applied to the manufacture of an environment-friendly laminate steel panel having excellent gloss, DOI and worlability without using a PVC film. If the curable coating composition according to the present invention is used, a plasticizer (phthalate) required for fabricating the PVC film is not used, thereby fabricating a film having a constant thickness in an environment-friendly manner using a simplified process. In addition, more than 20% of the manufacturing cost can be reduced, compared to the cost required for manufacturing the conventional laminate steel panel.

### [Detailed Description to Execute the Invention]

The molecular weight of a resin used in the present invention is determined by a general method known in the art, for example, gel permeation chromatography (GPC). In addition, the glass transition temperature of a resin used in the present invention is determined by a general method known in the art, for example, differential scanning calorimetry (DSC).

Hereinafter, the present invention will be described in detail. However, the present description is not intended to limit the invention to the following content, and when necessary, various components can be modified in various manners or can be optionally used together with each other. Therefore, it will be understood that the present invention is intended to cover all modifications, equivalents and alternatives, which may be included within the spirit and scope of the invention.

The curable coating composition according to the present invention comprises a polyester resin and a block isocyanate. The curable coating composition according to the present invention may further comprise an auxiliary resin, a curing agent, a pigment, a catalyst, a solvent or additives that are commonly used in the curable coating application fields, when necessary.

### Resin

The curable coating composition according to the present invention comprises a polyester resin as a main resin. The polyester resin may increase elongation and DOI in appearance when processing a film employing the curable coating composition.

The polyester resin may be a branched polyester resin or a linear polyester resin. As an example, the polyester resin may be a polyester polyol resin having a hydroxy group (-OH) at a polymer terminal. The polyester polyol resin may be produced by polymerizing glycol and dicarboxylic acid in the presence of a catalyst and a solvent.

Kinds of the glycol are not particularly limited, and usable examples of the glycol may include one selected from the group consisting of ethylene glycol, propylene glycol, 1,2-butylene glycol, neopentyl glycol, 1,6-hexanediol, glycerol, or a mixture thereof.

Kinds of the dicarboxylic acid are not particularly limited, and usable examples of the dicarboxylic acid may include one selected from the group consisting of terephthalic acid, isophthalic acid, 1,4-cyclohexane dicarboxylic acid, adipic acid, sebacic acid, phthalic anhydride, trimellitic anhydride, benzoic acid, tetrahydrophthalic anhydride, or a mixture thereof.

Kinds of the solvent are not particularly limited, and usable examples of the solvent may include an aromatic hydrocarbon solvent, and an acetate solvent.

The polyester resin may be a compound represented by the following chemical formula (1): 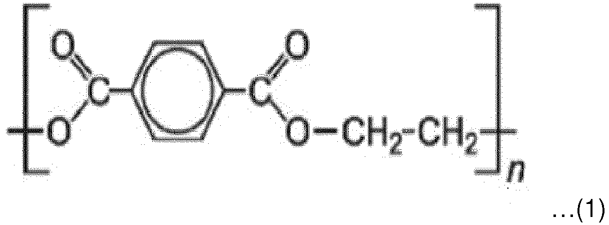 wherein n is an integer of 1 to 10,000.

The polyester resin may have a number-average molecular weight in the range from 8,000 to 14,000, for example, from 8,000 to 9,000, and a glass transition temperature (Tg) in the range from -20 °C to 40 °C, for example, from 0 °C to 20 °C. If the number-average molecular weight and glass transition temperature (Tg) of the polyester resin fall short of the ranges stated above, working adhesiveness and adhesion of the curable coating composition may be lowered. If the number-average molecular weight and glass transition temperature (Tg) of the polyester resin exceed the ranges stated above, the DOI of the surface of a coated article may be lowered.

The polyester resin may have an acid value in the range from 0 to 10 mgKOH/g, for example, from 0 to 4 mgKOH/g, a hydroxy (OH) value in the range from 10 to 25 mgKOH/g, for example, from 16 to 20 mgKOH/g. If the acid value and hydroxy value of the polyester resin satisfy the ranges stated above, a coating having excellent leveling performance, workability and appearance characteristics can be obtained.

The polyester resin may be contained in the curable coating composition in an amount of 40 to 75% by weight, for example, 50 to 70% by weight, based on the total weight of the curable coating composition. The polyester resin may have a 40 to 60% by weight, for example, 45 to 55% by weight, of a solid content. If the solid content of the polyester resin is within the stated above, the coating may have excellent basic properties, may demonstrate excellent corrosion resistance, chemical resistance and good appearance and may have improved adhesiveness to a metal layer.

The curable coating composition according to the present invention may further comprise an auxiliary resin as well as the polyester resin. The auxiliary resin may be used in combination with the polyester resin to compensate for boiling water resistance and adhesiveness of the curable coating composition.

The auxiliary resin may include one or more selected from the group consisting of acryl resin, epoxy resin, polyurethane resin and epoxy-modified polyester resin. The amount of the auxiliary resin used is not particularly limited, but may be not greater than 40% by weight, for example, in the range of 1% to 30% by weight, based on the total weight of the resin (solid content).

### Curing agent

The curable coating composition according to the present invention comprises block isocyanate as a curing agent. The block isocyanate causes a curing reaction with polyester resin to prevent thermal deformation and to increase coating adhesion.

As an example, the block isocyanate may be prepared by blocking one or more selected from the group consisting of diphenylmethane-4,4'-diisocyanate, toluene diisocyanate, 4,4'-diphenyldimethylmethane diisocyanate, xylene diisocyanate, 1,5-naphthalene diisocyanate, isophorone diisocyanate, hexamethylene diisocyanate, isopropylene diisocyanate, methylene diisocyanate, trimethylhexamethylene diisocyanate, lysine diisocyanate and methylcyclohexane diisocyanate with a phenol-, ketone-, oxime- or caprolactame-based blocking agent.

The block isocyanate may be contained in the curable coating composition in an amount of 1 to 10% by weight, for example, 1 to 5% by weight, based on the total weight of the curable coating composition. If the amount of the block isocyanate falls within the range stated above, a crosslinking density is improved without lowering the water resistance of a coating, thereby improving long-term corrosion resistance, adhesiveness and leveling efficiency of the coating.

In the curable coating composition according to the present invention, the polyester resin and the block isocyanate may be in a functional group ratio (NCO/OH) of 0.5 to 1.5, for example, 0.6 to 1.1. If the functional group ratio (NCO/OH) is less than 0.5, orange peel may occur due to an uncured coating, so that the appearance of the coating is degraded. If the functional group ratio (NCO/OH) is greater than 1.5, boiling water resistance and adhesiveness may be lowered.

### Pigment

Optionally, the curable coating composition according to the present invention may further comprise pigments commonly used in the field of curable coatings unless intrinsic characteristics of the coating composition are compromised.

The pigment may be used to render a desired color to a coating or increase the strength or gloss of the coating. Non-limiting examples of the pigment include generally used pigments such as an organic pigment, an inorganic pigment, a metal pigment, Al-paste or pearl, and these pigments may be used alone or in combination of two or more thereof. Non-limiting examples of the usable pigment include azo-, phthalocyanine-, iron oxide-, cobalt-, carbonate-, sulfate-, silicate-, chromate-based pigments, and so on. Examples of the pigment include titanium dioxide, zinc oxide, bismuth vanadate, cyanine green, carbon black, iron oxide red, iron oxide sulfur, navy blue, cyanine blue, and a mixture of two or more thereof.

The amount of the pigment is not particularly limited, but may be in the range of 0.1 to 30% by weight, for example, 1 to 10% by weight, based on the total weight of the curable coating composition. If the amount of the pigment falls within the range stated above, the coating adopting the curable coating composition according to the present invention may provide an excellent color rendering property, improved concealing property and a mechanical property (adhesiveness, etc.).

### Catalyst

Optionally, the curable coating composition according to the present invention may further comprise a catalyst commonly used in the field of curable coatings unless intrinsic characteristics of the coating composition are compromised.

The catalyst, which promotes a reaction between a polyester resin as a main resin and block isocyanate, may control workability and coating adhesion in forming a dry coating. Examples of the catalyst include an imidazole-based catalyst, a phosphonium-based catalyst, an amine-based catalyst and a metal-based catalyst, and these catalysts may be used alone or in combination of two or more thereof.

For example, a metal-based catalyst may be used as the catalyst in the present invention. Examples of the metal-based catalyst include an organic metal complex or an organic metal salt of cobalt, copper, zinc, iron, nickel, manganese, or tin. Examples of the organic metal complex include an organic cobalt complex, such as cobalt (II) acetyl acetonate, or cobalt (III) acetyl acetonate, an organic copper complex, such as copper (II) acetyl acetonate, an organic zinc complex, such as zinc (II) acetyl acetonate, an organic iron complex, such as iron (III) acetyl acetonate, an organic nickel complex, such as nickel (II) acetyl acetonate, an organic manganese complex, such as manganese (II) acetyl acetonate, but not limited thereto. Examples of the organic metal salt include zinc octylate, tin octylate, zinc naphthate, cobalt naphthate, tin stearate, zinc stearate, and tin laurate, but not limited thereto.

As an example, the catalyst may be a tin oxide of tin octylate, tin stearate or tin laurate. If tin oxide is used as the catalyst, the curing density suitable for coating environments can be secured, and a high degree of cure can be obtained at low temperature due to a quick catalyst reaction even if a small amount of catalyst is used.

In the present invention, the amount of the catalyst used can be appropriately adjusted according to reactivity of the polyester resin and block isocyanate. For example, the amount of the catalyst may be in the range of 0.01 to 1% by weight, for example, 0.1 to 0.2% by weight, based on the total weight of the curable coating composition. If the amount of the catalyst deviates from the range stated above, the mechanical property of the coating may be degraded.

### Solvent

The curable coating composition according to the present invention may comprise an organic solvent generally known in the art as a solvent without any limitation. The organic solvent may include an aromatic hydrocarbon solvent, an ester solvent, an ether solvent, an alcohol solvent or a mixture thereof.

Non-limiting examples of usable organic solvents may include Kocosol #100 (K-100, available from SK Energy Co., Ltd.), Kocosol #150 (K-150, available from SK Energy Co., Ltd.), cyclohexanone, xylene, toluene, cellosolve acetate, methylethyle ketone, dibasic ester, propylene glycol methylether acetate, n-butyl acetate, propylene glycol monomethyl acetate, 3-methoxy butyl acetate, ethylene glycol butyl ether, diethylene glycol methyl ether, diethylene glycol ethylether, diethylene glycol butyl ether, ethanol, isopropanol, n-buthanol, amyl alcohol, or a mixture thereof.

In the present invention, the organic solvent may be used in a balance amount satisfying the total weight of the curable coating composition (e.g., 100% by weight), for example, 20 to 30% by weight based on the total weight of the curable coating composition. When the amount of the solvent falls under the range stated above, the coating may demonstrate excellent physical properties while having improved workability.

### Additives

The curable coating composition according to the present invention may further comprise additives commonly used in the field of curable coatings unless advantages and effects of the present invention are compromised.

Non-limiting examples of usable additives include a dispersant, an adhesion improver, a curing retardant, a surface modifier, a defoamer, a surfactant, an emulsifier, a thickener, a weather resisting additive, a drying agent, an appearance modifier, a leveling agent, a desiccant, a coupling agent, and mixtures thereof.

The dispersant may prevent re-agglomeration of the various materials of the composition by dispersing the composition materials and maintaining distances between each of the composition materials, thereby allowing the coating to demonstrate uniform properties. A dispersant generally known in the art may be used as the dispersant. In an example, blocked copolymer type dispersant having a high molecular weight may be used.

The adhesion improver is used for enhancing adhesiveness with respect to a substrate of the coating. Usable examples of the adhesion improver include a silane-based adhesion improver, a polyester-based adhesion improver, and a mixture thereof.

The defoamer, which is a mixture of an lipophilic material and polysiloxane, suppresses bubbles from being generated during coating, thereby improving appearance characteristics of the coating. A defoamer that is generally known in the art may be used without any limitation. As an example, a polysiloxane-type defoamer may be used.

The leveling agent is used to increase coating surface evenness and smoothness, thereby improving appearance characteristics of the coating while increasing adhesiveness. A leveling agent that is generally known in the art may be used without any limitation. As an example, an acryl-, silicon-, polyester-, or amine-based leveling agent may be used in the present invention.

The additive may be added in an acceptable amount generally known in the art. As an example, the additive may be used in an amount of 1 to 5% by weight, based on the total weight of the curable coating composition.

The manufacturing method of the curable coating composition according to the present invention is not particularly limited. For example, the curable coating composition according to the present invention may be manufactured by a general method including inputting the polyester resin and the block isocyanate into mixer equipment, such as a dissolver or a stirrer, together with an auxiliary resin, a pigment, a catalyst, a solvent and other additives, if necessary, followed by mixing at an appropriate temperature (e.g., room temperature).

The present invention will now be described in more detail through the following examples, which are, however, provided for a better understanding of the invention and are not to be construed as limiting the scope of the invention.

### Examples 1-11 and Comparative Examples 1-8

Curable coating compositions of Examples 1-11 and Comparative Examples 1-8 were prepared by mixing resins, curing agents, pigments, catalysts, solvents and additives according to composition ratios listed in Tables 1 and 2, in which all percentages are on a weight basis unless otherwise indicated.

**Table 1**

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Resin 1 | 62 | | | | | | | | | | |
| Resin 2 | | 62 | | | | | | | | | |
| Resin 3 | | | 62 | | | 62 | 62 | 62 | 62 | 62 | 62 |
| Resin 4 | | | | 62 | | | | | | | |
| Resin 5 | | | | | 62 | | | | | | |
| Curing agent | 3.0 | 3.0 | 3.0 | 3.0 | 3.0 | 2.1 | 2.4 | 2.7 | 3.0 | 3.2 | 3.5 |
| Pigment | 6.35 | 6.35 | 6.35 | 6.35 | 6.35 | 7.25 | 6.95 | 6.65 | 6.35 | 6.15 | 5.85 |
| Catalyst | 0.15 | 0.15 | 0.15 | 0.15 | 0.15 | 0.15 | 0.15 | 0.15 | 0.15 | 0.15 | 0.15 |
| Solvent | 25.5 | 25.5 | 25.5 | 25.5 | 25.5 | 25.5 | 25.5 | 25.5 | 25.5 | 25.5 | 25.5 |
| Additive | 3 | 3 | 3 | 3 | 3 | 3 | 3 | 3 | 3 | 3 | 3 |
| Total | 100 | 100 | 100 | 100 | 100 | 100 | 100 | 100 | 100 | 100 | 100 |
| NCO/OH (eq.ratio) | 0.9 | 0.9 | 0.9 | 0.9 | 0.9 | 0.7 | 0.8 | 0.9 | 1.0 | 1.1 | 1.2 |

**Table 2**

| | Comparative Example | | | | | | | |
|---|---|---|---|---|---|---|---|---|
| | 1 | 2 | 3 | 4 | 5 | 6 | 7 | 8 |
| Resin 3 | | | | | | | 62 | 62 |
| Resin 6 | 62 | | | | | | | |
| Resin 7 | | 62 | | | | | | |
| Resin 8 | | | 62 | | | | | |
| Resin 9 | | | | 62 | | | | |
| Resin 10 | | | | | 62 | | | |
| Resin 11 | | | | | | 62 | | |
| Curing agent | 3 | 3 | 3 | 3 | 3 | 3 | 1.2 | 3.8 |
| Pigment | 6.35 | 6.35 | 6.35 | 6.35 | 6.35 | 6.35 | 8.15 | 5.55 |
| Catalyst | 0.15 | 0.15 | 0.15 | 0.15 | 0.15 | 0.15 | 0.15 | 0.15 |
| Solvent | 25.5 | 25.5 | 25.5 | 25.5 | 25.5 | 25.5 | 25.5 | 25.5 |
| Additive | 3 | 3 | 3 | 3 | 3 | 3 | 3 | 3 |
| Total | 100 | 100 | 100 | 100 | 100 | 100 | 100 | 100 |
| NCO/OH (eq.ratio) | 0.9 | 0.9 | 0.9 | 0.9 | 0.9 | 0.9 | 0.3 | 1.8 |

Resin 1: Mixed resin of 99% by weight of polyester polyol resin (Tg: 10 °C, Mn: 8,000, OH value: 12 mgKOH/g) and 1% by weight of epoxy-modified polyester polyol resin (Tg: -55 °C, Mn: 2,300, OH value: 100 mgKOH/g)
Resin 2: Mixed resin of 95% by weight of polyester polyol resin (Tg: 10 °C, Mn: 8,000, OH value: 12 mgKOH/g) and 5% by weight of epoxy-modified polyester polyol resin (Tg: -55 °C, Mn: 2,300, OH value: 100 mgKOH/g)
Resin 3: Polyester polyol resin (Tg: 0 °C, Mn: 8,000, OH value: 12 mgKOH/g)
Resin 4: Polyester polyol resin (Tg: 20 °C, Mn: 10,000, OH value: 12 mgKOH/g)
Resin 5: Polyester polyol resin (Tg: 10 °C, Mn: 13,000, OH value: 12 mgKOH/g)
Resin 6: Polyester polyol resin (Tg: 70 °C, Mn: 8,000, OH value: 12 mgKOH/g)
Resin 7: Polyester polyol resin (Tg: 50 °C, Mn: 9,000, OH value: 12 mgKOH/g)
Resin 8: Polyester polyol resin (Tg: 50 °C, Mn: 5,000, OH value: 12 mgKOH/g)
Resin 9: Polyester polyol resin (Tg: 40 °C, Mn: 6,000, OH value: 12 mgKOH/g)
Resin 10: Polyester polyol resin (Tg: 30 °C, Mn: 7,000, OH value: 12 mgKOH/g)
Resin 11: Polyester polyol resin (Tg: 20 °C, Mn: 6,000, OH value: 12 mgKOH/g)
Curing agent: Block isocyanate (PL350, available from Bayer/Covestro AG, NCO content: 11.5%)
Pigment: TiO₂ (available from Tronox Holdings PLC) and carbon black (available from Orion Engineered Carbons LLC)
Catalyst: Dibutyl tin diluarate (DBTDL)
Solvent: Mixed solvent of 1% by weight of methyl ethyl ketone (MEK), 8% by weight of propylene glycol monomethyl ether acetate (PMA), 10% by weight of cyclohexanol, 2.5% by weight of KOCOSOL #100 (available from SK Energy Co., Ltd.) and 4% by weight of RPDE (Rhodiasolv RPDE K, available from Solvay, 62.2% by weight of dimethyl glutarate, 23.8% by weight of dimethyl succinate and 14.0% by weight of dimethyl adiipate)
Additive: Acryl-based leveling agent

### Evaluation of properties

Various properties of the curable coating compositions prepared in Examples 1-11 and Comparative Examples 1-8 were measured in the following manners, and results thereof are indicated in Tables 3 and 4.

### Production of test pieces

Each of the curable coating compositions was coated on an electrogalvanized iron (EGI) panel to a thickness of 10 to 12 µm and dried at a peak metal temperature (PMT) of 232 °C to produce test pieces.

### Appearance (DOI)

The combined factor (CF) values for appearing surface quality were measured using a Wave-scan DOI meter (manufactured by BYK Gardner Corporation). The higher the CF value, the better the DOI.

The CF values were rated in the following criteria:
⊚: The CF value is greater than 30;
○: The CF value is greater than 27 and less than or equal to 30;
Δ: The CF value is greater than 25 and less than or equal to 27; and
X: The CF value is less than 25.

### Working adhesiveness

5 mm×5 mm test pieces were treated to have an Erichsen scratch depth of 6 mm and then visually examined with the unaided eye to primarily identify working adhesiveness of each coating. Next, the test pieces were left undisturbed in boiling water (80 °C) for 30 minutes and then visually examined with the unaided eye to identify working adhesiveness of the coating.

**Table 3**

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Appearance | ⊚ | ⊚ | ⊚ | ⊚ | ○ | ⊚ | ⊚ | ⊚ | ⊚ | ○ | ○ |
| Working adhesiveness | ⊚ | ⊚ | ⊚ | ⊚ | ⊚ | ⊚ | ⊚ | ⊚ | ⊚ | ⊚ | ⊚ |
| Working adhesiveness (Boiling water) | ○ | ○ | ⊚ | ⊚ | ⊚ | ○ | ○ | ⊚ | ⊚ | ○ | ○ |

| | | | | | | | | | | | |
|---|---|---|---|---|---|---|---|---|---|---|---|
| (⊚: Very good, ○: Good, Δ: Average, X: Poor) | | | | | | | | | | | |

**Table 4**

| | Comparative Example | | | | | | | |
|---|---|---|---|---|---|---|---|---|
| | 1 | 2 | 3 | 4 | 5 | 6 | 7 | 8 |
| Appearance | X | Δ | Δ | Δ | ○ | ⊚ | ⊚ | X |
| Working adhesiveness | ⊚ | ⊚ | ⊚ | ⊚ | ⊚ | ⊚ | ⊚ | ○ |
| Working adhesiveness (Boiling water) | ⊚ | ⊚ | ○ | ○ | Δ | Δ | X | Δ |

| | | | | | | | | |
|---|---|---|---|---|---|---|---|---|
| (⊚: Very good, ○: Good, Δ: Average, X: Poor) | | | | | | | | |

As seen from Tables 3 and 4, the coatings made of the curable coating compositions prepared in Examples 1-11 generally exhibited good properties, compared to the coatings made of the coating compositions prepared in Comparative Examples 1-8. Particularly, the evaluation results confirmed that the coatings made of the curable coating compositions prepared in Examples 1-11 were excellent in view of appearance (DOI) and working adhesiveness.

## Claims

1. A curable coating composition comprising:
a resin comprising a polyester resin; and
a curing agent comprising a block isocyanate,
wherein the polyester resin has a number-average molecular weight in the range from 8,000 to 14,000 and a glass transition temperature (Tg) in the range from -20 to 40 °C, and
a functional group ratio (NCO/OH) of the polyester resin and the block isocyanate in the range of between 0.5 and 1.5.

2. The curable coating composition of claim 1, wherein the polyester resin is a polyester polyol resin.

3. The curable coating composition of claim 1 or 2, wherein the resin further comprises an auxiliary resin in an amount of not greater than 40% by weight, based on the total weight of the resin (solid content)

4. The curable coating composition of any of the preceding claims, wherein the curable coating composition comprises 40 to 75% by weight of a polyester resin and 1 to 10% by weight of a block isocyanate, based on the total weight of the curable coating composition.
